# EUROPÄISCHE PATENTANMELDUNG

(11) **EP 1 205 318 A2**
(43) Veröffentlichungstag der Anmeldung: **15.05.2002**
(21) Anmeldenummer: 01126723.4
(22) Anmeldetag: 08.11.2001
(51) Int. Cl.: B60C 23/06

(54) **Vorrichtung für ein Zweirad und Verfahren zur Ermittlung eines Reifendrucks und/oder der Geschwindigkeit des Zweirades**

(30) Priorität: 10.11.2000 DE 10055822
(71) Anmelder: ECS Electronic Component Service GmbH & Co. KG, 53773 Hennef (DE)
(72) Erfinder: Uhl, Joachim, 51674 Wiehl (DE)
(74) Vertreter: Patentanwälte Lippert, Stachow, Schmidt & Partner

(57) **Zusammenfassung**

Um eine einfach durchzuführende und bequeme Kontrolle des Reifendrucks von Zweirädern, insbesondere Fahrrädern, bereitzustellen, wird eine Vorrichtung (1) vorgeschlagen, die eine Sensoreinrichtung, welche zum Erfassen von Zweiradbewegungen in wenigstens zwei vorgegebene, unterschiedliche Richtungen ausgebildet ist, und eine Datenverarbeitungseinrichtung (6) umfasst, welche im Ansprechen auf zumindest einer der vorgegebenen Richtungen zugeordnete Signale eine dem Reifendruck des Zweirades zugeordnete Information ermittelt.

Die Erfassung des Reifendrucks kann insbesondere so durchgeführt werden, dass das Fahrrad mit einem Rad vom Boden angehoben und zum Auslösen der Vertikalschwingung des entsprechenden Rades losgelassen wird.

## Beschreibung

Die Erfindung betrifft eine Vorrichtung für ein Zweirad zur Ermittlung des Reifendrucks und/oder der Geschwindigkeit des Zweirades sowie ein zugeordnetes Verfahren.

Die Einhaltung und Überwachung des vorgeschriebenen Luftdrucks in den Reifen eines Zweirades, insbesondere eines Fahrrades, ist von fundamentaler Bedeutung für das Fahrverhalten des Zweirades sowie für den Verschleiß der Reifen. Ferner steigt bei zu geringem Luftdruck die Pannenanfälligkeit, beispielsweise kann es beim Überfahren einer Bordsteinkante zum Zerquetschen des Schlauchs zwischen der Radfelge und der Kante kommen. Häufig wandert ein Schlauch im Mantel auf Grund eines zu geringen Reifendrucks, was auch zu einer Schiefstellung des Ventils und im Extremfall zu dessen Abreißen führen kann. Um die beschriebenen Probleme zu umgehen, werden Fahrradreifen üblicherweise mit dem drei- bis vierfachen der Nenndrücke von Autoreifen betrieben. Dies hat eine höhere Diffusion der Reifenluft zur Folge, weshalb Fahrradreifen viel häufiger als andere luftgefüllte Reifen auf einen korrekten Luftdruck überprüft und gegebenenfalls aufgepumpt werden müssen. In der Regel führt jedoch der Fahrradfahrer kein Manometer mit sich, sodass eine Überprüfung des Reifendrucks im Allgemeinen nicht möglich ist bzw. das Anfahren von Tankstellen erforderlich macht. Dieser Umstand kann dazu führen, dass der Reifendruck nur sehr unregelmäßig oder überhaupt nicht überprüft wird.

Auf dem Gebiet von Kraftfahrzeugen sind Verfahren bekannt, mit welchen der Reifenluftdruck im Fahrzeugreifen dadurch bestimmt wird, dass mit einem Sensor die Vertikalbewegungen des Rades aufgenommen und die zugeordneten Signale einer Auswerteschaltung zur Berechnung des Reifenluftdrucks zugeführt werden. Ein derartiges Verfahren ist beispielsweise in der DE 43 30 617 A1 und in der DE 43 00 677 A1 offenbart. Diese Verfahren beruhen auf dem Prinzip, aus gemessenen Fahrzeugschwingungen auf den Reifendruck zu schließen. Dabei wird in der Regel an jedem zu überwachenden Rad bzw. der damit verbundenen ungefederten Masse ein Sensor angebracht, welcher die schwingende Bewegung der ungefederten Masse aufnimmt.

Der Erfindung liegt die Aufgabe zu Grunde, eine einfach durchzuführende und bequeme Kontrolle des Reifendrucks von Zweirädern, insbesondere von Fahrrädern, bereitzustellen.

Diese Aufgabe wird erfindungsgemäß schon mit einer Vorrichtung für ein Zweirad mit luftgefüllten Reifen nach Anspruch 1 sowie einem Verfahren mit den Merkmalen des Anspruchs 10 gelöst. Um eine dem Reifendruck zugeordnete Information ohne Eingriff in den Überdruckbereich des Reifens bereitzustellen, umfasst die erfindungsgemäße Vorrichtung eine Sensoreinrichtung, die zum Erfassen von Zweiradbewegungen in wenigstens zwei vorgegebene Richtungen ausgebildet ist, womit eine Separation der Schwingungsbewegung der einzelnen Räder durchführbar ist, wobei die Sensoreinrichtung bewegungsabhängige Signale an eine Datenverarbeitungseinrichtung weitergibt, welche im Ansprechen auf zumindest einer der vorgegebenen Richtungen zugeordnete Signale eine dem Zweirad zugeordnete Information, insbesondere eine dem Reifendruck zugeordnete Information, ermittelt.

Der erfindungsgemäßen Vorrichtung liegt der Gedanke zu Grunde, die vertikalen Schwingungsbewegungen der beiden Räder des Zweirades mit einer Sensoreinrichtung aufzunehmen, die zum Erfassen von Bewegungen in zwei vorgegebene, unterschiedliche Richtungen ausgebildet ist. Auf diese Weise kann eine Separation der Schwingungsbewegungen der einzelnen Räder untereinander durchgeführt werden, was die nachfolgende Verarbeitung stark erleichtert bzw. zu sehr genauen Reifendruckbestimmungen führt.

Um eine maximale Trennung der beiden dem jeweiligen Rad zugeordneten Bewegungen bereitzustellen, kann vorgesehen sein, dass die Sensoreinrichtung als zweiachsiges Sensorsystem ausgebildet ist, wobei beide Achsen im Wesentlichen senkrecht zueinander liegen. Werden die Bewegungen in Richtung zu beiden Achsen am gleichen Erfassungsort durchgeführt, wird erreicht, dass die von der Sensoreinrichtung für die beiden Räder aufgenommenen Signale nicht an eine zentrale Stelle weitergeleitet werden müssen, wo sie weiterverarbeitet werden können. Stattdessen ist es erfindungsgemäß nun möglich, sowohl die Erfassung der den beiden Rädern zugeordneten Schwingungsbewegungen als auch die nachfolgende Datenverarbeitung zur Berechnung beispielsweise des Reifendrucks in einem oder beiden Reifen am gleichen Ort durchzuführen, wodurch elektrische Leitungen und deren umständliche Installation entfallen können.

Eine besonders vorteilhafte Ausführungsform ergibt sich, wenn die Vorrichtung eine Lenker-Befestigungseinrichtung aufweist, und die Sensoreinrichtung am Lenker derart ausgerichtet ist, dass eine der Sensorachsen im Wesentlichen parallel zur Vertikalen und die zweite Achse im Wesentlichen parallel zur Horizontalen liegt. Somit wird die Vertikal-Schwingungsbewegung des Vorderrades im Wesentlichen von dem der ersten Achse zugeordneten Teil der Sensoreinrichtung erfasst, und die Vertikal-Schwingungsbewegungen des Hinterrades werden im Wesentlichen von dem der zweiten Achse zugeordneten Teil der Sensoreinrichtung erfasst. Dabei werden die Vertikal-Schwingungsbewegungen des Hinterrades mittels als hebelwirkende Fahrradteile so umgelenkt, dass sie am Ort der Sensoreinrichtung in der horizontalen Sensorsachse der Sensoreinrichtung erfassbar sind. Demnach stehen die Schwingungsparameter von Vorder- und Hinterrad separat zur Verfügung und können demnach auch separat zur Bestimmung des Reifendrucks im zugeordneten Rad verwendet werden. Erfindungsgemäß lässt sich so der Reifendruck in einem vorgegebenen Reifen bestimmen, ohne dass das Ergebnis vom Reifendruck des anderen Reifens nennenswert beeinflusst wird.

Es ist darauf hinzuweisen, dass mit der erfindungsgemäßen Vorrichtung bzw. dem erfindungsgemäßen Verfahren vorteilhafterweise auch bei gefederten Fahrrädern der Reifendruck bestimmt werden kann. Die für die Erfassung des Reifendrucks notwendige Anregung des Masse-Feder-Systems kann dabei so klein eingestellt werden, dass die Fahrradfederung darauf noch nicht anspricht und somit im Wesentlichen starr ist, sodass die Messung durch die Federung nicht bzw. vernachlässigbar beeinflusst wird.

Die Sensoreinrichtung kann mit Vorteil als mikromechanisches Sensorsystem ausgebildet sein, wodurch sich einerseits eine kompakte Bauweise und andererseits ein minimales Eigengewicht der gesamten Vorrichtung ergibt. Als Sensorart kommen prinzipiell alle möglichen Bewegungssensoren, d.h. Translationssensoren, Geschwindigkeitssensoren oder Beschleunigungssensoren infrage, wobei letztere den Vorteil aufweisen, dass diese insbesondere bei kleinen Translationsbewegungen eine genauere Erfassung der Schwingungsbewegung ermöglichen. Besonders vorteilhaft ist die Verwendung eines Sensors, welcher ein digitales Signal an den Mikroprozessor abgibt, da somit ein externer A/D-Wandler eingespart werden kann.

Vorteilhafterweise weist die erfindungsgemäße Vorrichtung ferner eine Speichereinrichtung und eine Eingabeeinrichtung auf, die beide mit der Datenverarbeitungseinrichtung in Verbindung stehen. Diese Einrichtungen ermöglichen die Eingabe und Abspeicherung von Zweiradparametern, mithilfe derer beispielsweise Pumpintervalle berechnet und angezeigt werden können. Um beispielsweise eine notwendige Überprüfung des Reifendrucks oder einen Aufpumpzeitpunkt anzuzeigen, kann vorgesehen sein, dass die erfindungsgemäße Vorrichtung eine Einrichtung zum Abgeben eines akustischen und/oder optischen Signals umfasst.

Überaus vorteilhaft ist es, wenn die erfindungsgemäße Vorrichtung in einem Fahrradcomputer integriert ist. Damit wird erreicht, dass die Funktionen eines Fahrradcomputers mit den Funktionen der erfindungsgemäßen Vorrichtung in einem einzelnen Gerät, das am Lenker eines Fahrrades befestigbar ist, integriert werden können. Auf Grund der Verwendung der mikromechanischen Beschleunigungssensoren erhöht sich die Bauweise eines derartigen Fahrradcomputers kaum. Weiterhin kann die Anzeige- und die Eingabeeinrichtung eines derartigen Fahrradcomputers auch zur Eingabe bzw. Anzeige der reifenspezifischen Parameter verwendet werden sowie die Datenverarbeitungseinrichtung des Fahrradcomputers auch die mit dem Reifendruck zusammenhängenden Funktionen steuern. Demnach können in einer kombinierten Vorrichtung die Mehrzahl der Einrichtungen für mehrere Funktionen benutzt werden, sodass ein Kombigerät sehr viel billiger und kompakter als zwei einzelne, getrennte Vorrichtungen herstellbar ist.

Die erfindungsgemäße Vorrichtung kann in vielfältiger Weise zur Ermittlung des Reifendrucks und zur Kontrolle eingesetzt werden. Die erforderliche Schwingung kann dabei entweder während des Fahrens, beispielsweise beim Überfahren von Fahrbahnunebenheiten, angeregt werden, sodass während der Fahrt der Reifendruck bzw. eine dem Reifendruck zugeordnete Information für Vorder- und Hinterrad ermittelbar ist. Um ein besonders genaues Schwingungssignal zur Ermittlung eines Reifendrucks zu erzeugen, ist erfindungsgemäß vorgesehen, dass das Zweirad leicht mit einem Rad vom Boden angehoben und zum Auslösen der Vertikalschwingung des entsprechenden Rades losgelassen wird. Dabei kann sowohl durch Liften und Abfallenlassen des Vorderrades am Lenker bzw. durch Liften und Abfallenlassen des Hinterrades am Sattel eine Vertikalschwingung im Wesentlichen in einem einzelnen Rad erzeugt werden. Es ist jedoch grundsätzlich auch möglich, dass das Fahrrad mit beiden Rädern angehoben wird und damit gleichzeitig in beiden Rädern Vertikalschwingungen angeregt werden, mithilfe derer gleichzeitig für beide Räder eine dem jeweiligen Reifendruck zugeordnete Information bzw. der Reifendruck selbst ermittelt werden kann. Der Fachmann erkennt, dass das erfindungsgemäße Verfahren auch eine einfach durchzuführende Reifendruckmessung bereitstellt, wenn jeweils ein Bewegungssensor am Hinterrad und am Vorderrad platziert ist. In diesem Fall können die beiden Sensoren jeweils die Bewegung in vertikaler, d.h. in der gleichen Richtung erfassen, wobei die Signale zur Weiterverarbeitung beispielsweise zu einer zentralen Prozessoreinrichtung übertragen werden.

Bei der Verarbeitung der aufgenommenen Vertikalschwingungen in die beiden vorgegebenen unterschiedlichen und den beiden Rädern zugeordneten Richtungen wird grundsätzlich eine Beziehung des Reifendrucks zur Reifenfederkonstante ausgenutzt. Dabei hängen sowohl die Amplitude als auch die Eigenfrequenz der Schwingung direkt proportional von der Reifensteifigkeit ab, welche die Federkonstante des aus der Radmasse und dem luftgefederten Reifen gebildeten schwingungsfähigen Feder-Masse-Systems darstellt. Beispielsweise kann aus der Resonanzfrequenz des aus der Reifen-Federkonstanten und der Radmasse gebildeten schwingungsfähigen Systems der Luftdruck berechnet werden. Hierbei kann auch eine Bestimmung der Radeigenfrequenz, beispielsweise durch Analyse des Frequenzspektrums mittels einer FFT (Fast Fourier Transformation)-Analyse erfolgen. In einer vorteilhaften Ausführungsform der Erfindung wird die Abklingkonstante der angeregten gedämpften Schwingung gemessen und zur Ermittlung des Reifendrucks in dem der Schwingung zugeordneten Reifen verwendet. Eine sehr genaue und einfach durchzuführende Bestimmung einer dem Reifendruck zugeordneten Information ist die Ermittlung des Zeitintegrals der gedämpften Amplitude, wobei das Zeitintegral auf eine vorgegebene Amplitude, beispielsweise eine Anfangsamplitude, normiert wird. Als Maß für die Abklingkonstante der Schwingung wird auf diese Weise die Fläche unter dem normierten Amplitudenverlauf gebildet, wobei sich die Fläche reziprok zum Reifendruck verhält. Günstigerweise besteht sowohl zwischen der Frequenz der angeregten gedämpften Schwingung und dem Reifendruck als auch zwischen der Abklingkonstante und dem Reifendruck im Wesentlichen eine direkte Proportionalität. Im Allgemeinen wird je nach Ausführungsform z.B. eine Schwingungsfrequenz, eine Abklingkonstante oder ein Zeitintegral des Amplitudenverlaufs ermittelt und dieser Wert im Rahmen einer Polynomapproximation zwischen vorbestimmten Funktionspaaren für eine Berechnung des zugeordneten Reifendrucks verwendet. Für die beschriebenen Ausführungsformen zur Bestimmung einer Schwingungsfrequenz, einer Abklingkonstante oder ein Zeitintegrals wird demnach zwischen den vorbestimmten Werten linearisiert. So wird ein linearer Verlauf zwischen den vorbekannten Extremalwerten von bekannten Reifendrücken zu zugeordneten Zeitintegralen der Amplitudenverläufe angenommen und mit der bekannten Steigung und einem ermittelten Zeitintegral des Amplitudenverlaufs der zugeordnete Reifendruck berechnet.

Mit der erfindungsgemäßen Vorrichtung ist es ferner möglich, die Geschwindigkeit des Zweirades zu berechnen, da nacheinander mit dem Vorderrad und dem Hinterrad überfahrene Fahrbahnunebenheiten die beschriebenen Vertikalschwingungen in den Rädern anregen und diese Schwingungen eine vom Abstand der beiden Räder abhängige Phasenschiebung aufweisen, die einen direkte Rückschluss auf die Geschwindigkeit ermöglicht.

Vorteilhafterweise kann die erfindungsgemäße Vorrichtung den Fahrer aktiv auf notwendige Reifendrucküberprüfungen in Abhängigkeit von eingegebenen Informationen wie Reifenausgangsdruck, Reifenminimaldruck, Streckeninformation, zeitlicher Abstand zur letzten Streckeninformation, zeitlicher Abstand zur letzten Reifendrucküberprüfung oder Fahrergewicht aufmerksam machen, sodass der Fahrer sich nicht mehr um notwendige Wartungsintervalle kümmern muss, sondern diese nun automatisch angezeigt werden.

Die Erfindung wird im Folgenden durch das Beschreiben einiger Ausführungsformen unter Bezugnahme auf die anliegenden Zeichnungen erläutert, wobei
- Fig. 1a: in einer Prinzipskizze ein Fahrrad mit am Lenker montierter erfindungsgemäßer Vorrichtung,
- Fig. 1b: das in Fig. 1a dargestellte Fahrrad mit vereinfachten, veranschaulichenden Hebelverhältnissen,
- Fig. 2a-b: beispielhafte erfasste Vertikal-Schwingungen eines Vorderrades und
- Fig. 3: in einer Prinzipskizze den Aufbau einer Ausführungsform der erfindungsgemäßen Vorrichtung

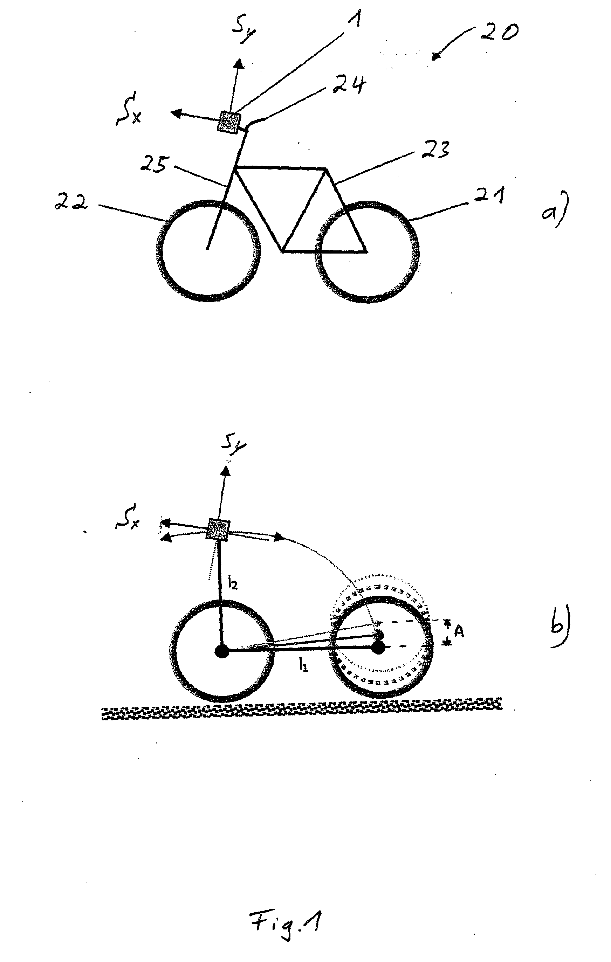

zeigt. Fig. 1a zeigt in einer Prinzipskizze ein Fahrrad 20, an dessen Lenker 24 eine erfindungsgemäße Vorrichtung 1 mittels einer nicht dargestellten Haltevorrichtung eingebracht ist. Diese Vorrichtung weist einen mikromechanischen Sensor zum Erfassen von Beschleunigungen in zwei zueinander senkrecht liegenden Richtungen Y und X auf. In Y-Richtung wird eine Beschleunigung S_{y} und in X-Richtung wird eine Beschleunigung Sₓ erfasst. Wie aus der Zeichnung ersichtlich, führt eine Vertikalschwingung des Vorderreifens 22 im Wesentlichen zu einer Beschleunigungsamplitude S_{y}, während deren Einfluss in X-Richtung in erster Näherung vernachlässigbar ist. Die Übertragung der Schwingungsbewegung des Hinterrades 21 über den Rahmen 23 und die Vordergabel 25 wird in Fig. 1b verdeutlicht, in der die Hebelverhältnisse vereinfacht dargestellt sind. In der Darstellung sind die durch die Vordergabel 25 und den Rahmen 23 gebildeten Hebel durch die senkrecht aufeinander stehenden Hebel L2 und L1 veranschaulicht. Eine vertikale Beschleunigungsamplitude A am Hinterrad 21 erzeugt danach eine Beschleunigung Sₓ in X-Richtung, die proportional zum Hebelverhältnis L2/L1 ist. Somit wird durch die spezifische Anordnung des mikromechanischen Sensors mit seinen zwei zueinander senkrecht stehenden Achsen sowie durch die spezielle Platzierung des Sensors auf dem Fahrrad die Separierung der Vertikalschwingungsbewegung von Vorder- und Hinterrad erreicht, wodurch im Wesentlichen voneinander unabhängige Messsignale für die weitere Verarbeitung vorliegen.

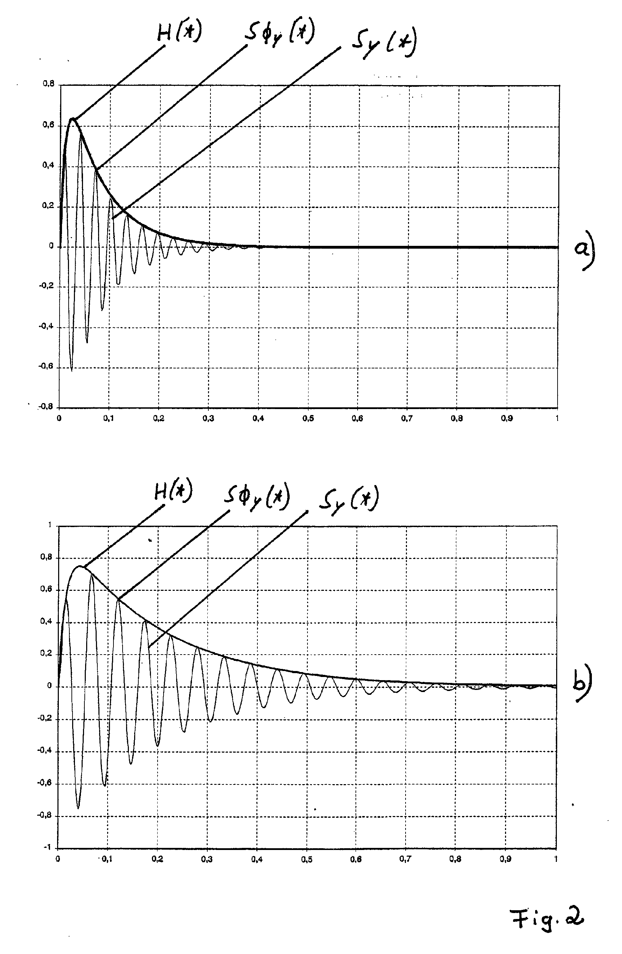

Beispielhaft erfasste Verläufe von angeregten Vertikalschwingungsbewegungen eines Vorderrades zeigen die Fig. 2a, 2b. Fig. 2a zeigt einen typischen Verlauf für die Vertikalschwingungsbewegung eines Reifens mit hohem Reifendruck. Die Schwingung wird dabei beispielsweise durch kurzzeitiges Anheben und Fallenlassen des betreffenden Rades erzeugt. Wie zu erkennen, baut sich nach der Anregung eine Schwingung mit einer zeitabhängigen Beschleunigung S_{y}(t) innerhalb des Reifens auf und wird nachfolgend durch Energiedissipation gedämpft, d.h. abgebaut. Dem gemäß nimmt die Amplitude S0_{y}(t) der Beschleunigungsschwingung mit der Zeit ab. Als Maß für diese Abklingkonstante σ kann beispielsweise der Flächeninhalt unter den Einhüllenden H(t) dienen. Im Unterschied zu der in Fig. 2a gezeigten Schwingung ist die in Fig. 2b gezeigte Schwingung für einen Reifen mit zu geringem Reifendruck aufgenommen. Wie zu erkennen, ist die Abklingkonstante gegenüber dem ersten Fall erhöht und die Schwingungsfrequenz erniedrigt.

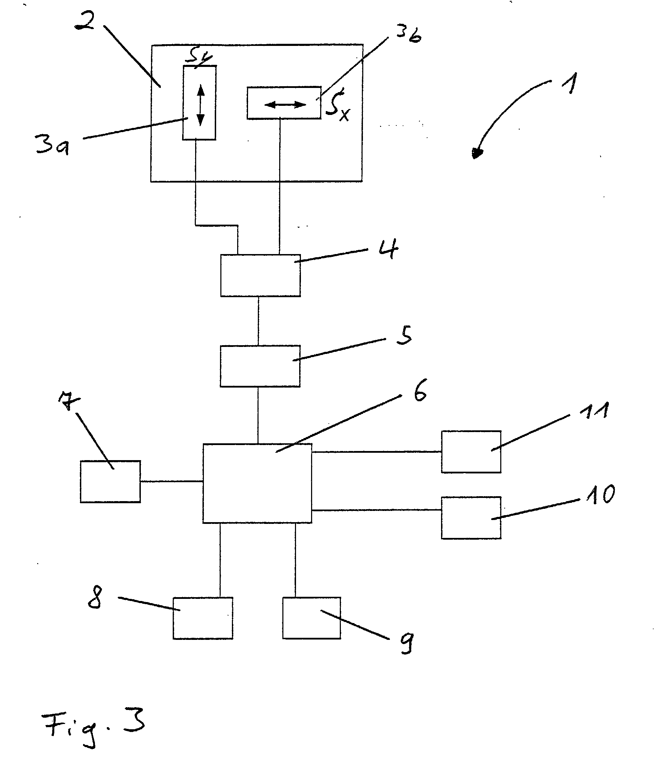

Eine Prinzipskizze der erfindungsgemäßen Vorrichtung 1 zeigt Fig. 3. Ein mikromechanischer Sensor 2 ist zur Erfassung von Beschleunigungen in zwei zueinander senkrechte Richtungen X, Y ausgebildet. Hierzu umfasst dieser zwei Teilsensoren 3a, 3b, welche die Beschleunigungswerte in die jeweilige Richtung erfassen. Zugeordnete Analogwerte der Sensorkomponenten 3a, 3b werden über einen Multiplexer 4 auf einen A/D-Wandler 5 gegeben. Der Multiplexer weist eine sample-and-hold-Schaltung auf, um dem Wandler die zu konvertierenden Werte stabil vorzugeben.

Die den analogen Beschleunigungswerten zugeordneten digitalen Werte werden von einer zentralen Prozessoreinheit 6 erfasst und für eine spätere Berechnung im Speicher 8 abgelegt. Zur Steuerung der Vorrichtung ist ein ROM (Read Only Memory) 11 an die Prozessoreinheit angeschlossen, welche die Betriebssoftware als abrufbare Module umfasst. Die Vorrichtung kann von außen durch eine Tastatureinrichtung 9 gesteuert werden, über die auch vorbestimmte Parameter eingebbar sind. Der Prozessor 6 steuert ferner einen Piezo-Lautsprecher 10, über den ein akustisches Signal abgebbar ist. Eine Anzeige 7 dient zur optischen Darstellung von Informationen.

In einer bestimmten Ausführungsform der Erfindung wird die Vorrichtung zuerst für den späteren Betrieb vorbereitet. Hierzu wird das Vorderrad des Fahrrades auf einen bestimmten niedrigen Druck pₘᵢₙ aufgepumpt. Über die Tasteneinrichtung 9 wird der Prozessor auf die nun folgende Erfassung der Schwingungsbewegung eingestellt. Daraufhin wird das Vorderrad am Lenker auf etwa 1 cm angehoben und dann zurück auf den Boden fallengelassen. Die gedämpfte Schwingungsbewegung in Y-Richtung wird vom System aufgenommen. Dabei wird mit einer Abtastrate von 100 Hz die Beschleunigungskomponente S_{y} von der Sensoruntereinheit 3a erfasst, vom A/D-Wandler 5 digitalisiert und über den Prozessor 6 im Speicher 8 abgelegt. Nach der Schwingungserfassung erfolgt eine Datenverarbeitung der erfassten Werte zur Ermittlung der Abklingkonstante der Schwingung. Hierzu wird das Zeitintegral der gedämpften Schwingungsamplitude berechnet, das proportional zur Abklingkonstante ist. Damit das berechnete Flächenintegral unabhängig von der Lifthöhe des Vorderrades ist, wird die Fläche auf eine Anfangsamplitude der Schwingung normiert. Das von der Abklingkonstante abhängige Flächenintegral wird nun zusammen mit einem vom Benutzer eingegebenen und gemessenen Reifendruck an vorbestimmter Stelle in Speicher 8 abgelegt. Das gleiche Verfahren wird darauffolgend für einen hohen Reifendruck pₘₐₓ des Vorderrades wiederholt. Da der Zusammenhang zwischen der Abklingkonstante und dem Reifendruck linear ist, können im Folgenden die beiden eingestellten Eckwerte zur Berechnung eines unbekannten Reifendrucks aus der gemessenen Abklingkonstante bzw. dem gemessenen Zeitintegral berechnet werden. Die gleiche Prozedur ist für das Hinterrad durchzuführen, wobei zum Erzeugen der vertikalen Schwingungsbewegung am Hinterrad dieses durch kurzes Hochheben am Sattel geliftet wird. Wie obenstehend erläutert, erfasst der mikromechanische Sensor 2 am Lenkrad die Hinterradschwingung mit der Sensoreinheit 3b, da die vertikale Hinterradschwingung im Wesentlichen über die beschriebenen Hebelverhältnisse die X-Achse des Sensors anspricht.

Nach diesen Voreinstellungen kann zu jedem Zeitpunkt der momentan herrschende Reifendruck im Hinterrad bzw. im Vorderrad durch den Fahrer gemessen werden, indem er den zugeordneten Messmodus wählt und die vertikale Schwingungsbewegung im zugeordneten Rad auslöst.

Ferner ist ein weiterer Betriebsmodus vorgesehen. Dieser kann immer dann gewählt werden, wenn keine Möglichkeit besteht, den zuerst beschriebenen Betriebsmodus vorzubereiten, weil kein Druckmessgerät für einen Anlernmodus zur Verfügung steht. In diesem Fall ist vorgesehen, beide Räder auf den vom Fahrer subjektiv als optimal angesehenen Druck aufzupumpen und die sich bei diesem Druck einstellenden Schwingungsparameter bzw. die den Schwingungsparametern zugeordneten Informationen abzuspeichern. Fällt der Reifendruck im Folgenden unter Zugrundelegen einer mittleren Kennlinie von Druck zum Schwingungsparameter unter eine feste oder einstellbare Grenze, so gibt die Vorrichtung über die Anzeige 7 und den Piezo-Lautsprecher 10 eine Warnung aus. Beispielsweise kann die Vorrichtung so eingestellt sein, dass der Fahrer auf den Druckverlust aufmerksam gemacht wird, wenn dieser 10% überschreitet.

In einem weiteren Betriebsmodus ist vorgesehen, dass der Fahrer nach berechneten oder voreingestellten Zeitintervallen an die Notwendigkeit zur Überprüfung des Reifenluftdrucks erinnert wird. Da der Luftdruck selbst die bestimmende Größe für die Geschwindigkeit des durch Diffusion hervorgerufenen Druckabbaus ist, kann das System auf Grund der Kenntnis des zu einem vorgegebenen Zeitpunkt vorherrschenden Luftdrucks berechnen, zu welchem Zeitpunkt der jeweilige Reifen wieder aufgepumpt werden muss. Weiterhin ist auch vorgesehen, dass der Fahrer zusätzlich spezifische Parameter wie beispielsweise Fahrergewicht und Streckenprofil eingibt, damit eine genauere Vorhersage des Druckabbaus durchgeführt werden kann und damit die notwendigen Pumpintervalle noch besser bestimmt werden können.

In einer weiteren Ausführungsform der Erfindung ist die Vorrichtung 1 auch zum Messen der Fahrradgeschwindigkeit ausgebildet. Diese beruht auf der Separation von Vorderrad- und Hinterradsignalen mit dem zentralen, am Lenker angeordneten zweiachsigen Beschleunigungssensor. Auf Grund der hohen Empfindlichkeit des Beschleunigungssensors wird jede noch so kleine Unebenheit der Fahrtstrecke erfasst. Das Überfahren einer Unebenheit zuerst mit dem Vorderrad und nachfolgend mit dem Hinterrad hat eine Erfassung von den einzelnen Rädern zugeordneten phasenverschobenen Schwingungen im Y-Kanal und im X-Kanal zur Folge. Bei bekanntem und in Speicher 8 ablegbarem Radstand kann mittels der gemessenen Phasenschiebung die Fahrradgeschwindigkeit berechnet und auf der Anzeigeeinrichtung 7 dargestellt werden.

### Bezugszeichenliste

- 1: Vorrichtung zur Ermittlung des Reifensdrucks
- 2: mikromechanischer Sensor
- 3a, b: Sensorkomponenten
- 4: Multiplexer
- 5: A/D-Wandler
- 6: Mikroprozessor
- 7: Anzeigeeinrichtung
- 8: Speichereinrichtung
- 9: Tasteneinrichtung
- 10: Piezo-Lautsprecher
- 11: ROM
- 20: Fahrrad
- 21: Hinterreifen
- 22: Vorderreifen
- 23: Fahrradrahmen
- 24: Lenker
- 25: Vordergabel
- L1, L2: Hebel
- x,y: Richtung
- SOₓ(t),: S0_{y}(t) zeitabhängige Amplitude der Beschleunigung am Sensor
- Sₓ(t),S_{y}(t): zeitabhängige Beschleunigung am Sensor
- H(t): Einhüllende der Amplitude

## Patentansprüche

1. Vorrichtung (1) für ein Zweirad (20) mit luftgefüllten Reifen, mit einer
- Sensoreinrichtung (2), die zum Erfassen von ZweiradBewegungen in wenigstens zwei vorgegebene, unterschiedliche Richtungen (X,Y) ausgebildet ist, womit eine Separation der Schwingungsbewegung der einzelnen Räder durchführbar ist, wobei die Sensoreinrichtung bewegungsabhängige Signale an eine
- Datenverarbeitungseinrichtung (6) weitergibt, die im Ansprechen auf zumindest einer der vorgegebenen Richtungen (X,Y) zugeordnete Signale eine dem Zweirad zugeordnete Information, insbesondere eine dem Reifendruck und/oder der Zweiradgeschwindigkeit zugeordnete Information, ermittelt.

2. Vorrichtung (1) nach Anspruch 1, **dadurch gekennzeichnet, dass** die Sensoreinrichtung (2) ein zweiachsiges Sensorsystem (3a, 3b) umfasst, wobei die beiden Achsen im Wesentlichen senkrecht zueinander liegen und Bewegungen parallel zu den beiden Achsen erfassbar sind und der Erfassungsort für die Bewegung in Richtung der beiden Achsen im Wesentlichen gleich ist.

3. Vorrichtung (1) nach Anspruch 1 oder 2, **gekennzeichnet durch** eine Anzeigeeinrichtung (7), mit welcher ermittelte Information anzeigbar ist.

4. Vorrichtung (1) nach einem der Ansprüche 1 bis 3, **dadurch gekennzeichnet, dass** die Vorrichtung (1) eine Lenker-Befestigungseinrichtung aufweist und die Sensoreinrichtung bei befestigter Vorrichtung derart angeordnet ist, dass die erste Achse im Wesentlichen parallel zur Vertikalen und die zweite Achse im Wesentlichen parallel zur Horizontalen liegt.

5. Vorrichtung (1) nach einem der Ansprüche 1 bis 4, **dadurch gekennzeichnet, dass** die Sensoreinrichtung (2) die jeweilige Beschleunigung in die vorgegebenen Richtungen (X, Y) erfasst.

6. Vorrichtung (1) nach einem der Ansprüche 1 bis 5, **dadurch gekennzeichnet, dass** die Vorrichtung eine Speichereinrichtung (8) und eine Eingabeeinrichtung (9) umfasst, die mit der Datenverarbeitungseinrichtung (6) in Verbindung stehen.

7. Vorrichtung (1) nach einem der Ansprüche 1 bis 6, **gekennzeichnet durch** eine Einrichtung zur Ermittlung von Pumpintervallen in Abhängigkeit von voreingestellten Zweiradparametern, insbesondere von Reifenausgangsdruck, Reifenminimaldruck, Streckeninformationen, zeitlicher Abstand zur letzten Reifendrucküberprüfung und/oder Fahrergewicht.

8. Vorrichtung (1) nach Anspruch 7, **gekennzeichnet durch** eine Einrichtung (10) mit welcher ein akustisches und/oder optisches Signal abgebbar ist.

9. Vorrichtung (1) nach einem der Ansprüche 1 bis 8, **dadurch gekennzeichnet, dass** die Vorrichtung in einen Fahrradcomputer integriert ist.

10. Verfahren zur Ermittlung einer, einem Reifendruck und/oder der Geschwindigkeit eines Zweirades zugeordneten Information, insbesondere mit einer Vorrichtung nach einem der Ansprüche 1 bis 9, **dadurch gekennzeichnet, dass** Bewegungen in zumindest zwei vorgegebene Richtungen erfasst werden, wodurch eine Separation der Schwingungsbewegung der einzelnen Räder durchführbar ist und den erfassten Bewegungen zugeordnete Signale abgegeben werden und im Ansprechen auf die Signale eine, einem Reifendruck und/oder der Geschwindigkeit des Zweirades zugeordnete Information ermittelt wird.

11. Verfahren nach Anspruch 10, **dadurch gekennzeichnet, dass** das Zweirad mit einem Rad zum Erzeugen einer Ausgangsamplitude einer Zweiradschwingung angehoben und zum Auslösen der Zweiradschwingung losgelassen wird, wobei die nachfolgende gedämpfte Schwingungsbewegung erfasst und zur Ermittlung eine dem Reifendruck des angehobenen Rades zugeordnete Information verwendet wird.

12. Verfahren nach einem der Ansprüche 10 oder 11, **dadurch gekennzeichnet, dass** der Reifendruck durch die Ermittlung einer Schwingungsfrequenz bestimmt wird.

13. Verfahren nach einem der Ansprüche 10 oder 11, **dadurch gekennzeichnet, dass** der Reifendruck durch die Ermittlung einer der Abklingkonstanten einer Schwingung zugeordneten Information bestimmt wird.

14. Verfahren nach Anspruch 13, **dadurch gekennzeichnet, dass** der Reifendruck durch eine Ermittlung des Zeitintegrals des Amplitudenverlaufs der Zweiradschwingung bestimmt wird, wobei das Zeitintegral auf eine vorgegebene Amplitude normiert wird.

15. Verfahren nach einem der Ansprüche 12, 13 oder 14, **dadurch gekennzeichnet, dass** die ermittelte Schwingungsfrequenz, die ermittelte Abklingkonstante oder das ermittelte Zeitintegral des Amplitudenverlaufs mittels einer Polynomapproximation zwischen vorbestimmten Funktionspaaren von Schwingungsfrequenz, Abklingkonstante oder Zeitintegral und zugeordneten Reifendrücken für eine Berechnung des zugeordneten Reifendrucks verwendet wird.

16. Verfahren nach Anspruch 15, **dadurch gekennzeichnet, dass** normierte Zeitintegrale (Aₘᵢₙ, Aₘₐₓ) der Amplitudenverläufe für zwei Extremalwerte von bekannten Reifendrücken (pₘᵢₙ, pₘₐₓ) erfasst werden und nachfolgend ein unbekannter Reifendruck (p) mittels des zugeordneten normierten Zeitintegrals des Amplitudenverlaufs unter Berücksichtigung einer linearen Regression zwischen den bekannten Extremalwerten (pₘᵢₙ, pₘₐₓ) berechnet wird.

17. Verfahren nach einem der Ansprüche 10 bis 15, **dadurch gekennzeichnet, dass** die Vertikal-Schwingungsbewegungen beider Räder mit einem zweiachsigen Sensorsystem erfasst werden, wobei eine Achse im Wesentlichen parallel zur Vertikal-Schwingungsbewegungsrichtung eines diesem zugeordneten Rades liegt.

18. Verfahren nach Anspruch 17, **dadurch gekennzeichnet, dass** die zweite Achse des Sensorsystems im Wesentlichen senkrecht zur ersten Achse liegt und die Vertikal-Schwingungsbewegungen des anderen Rades mittels als Hebel wirkende Fahrradteile so umgelenkt werden, dass sie am Ort des Sensorsystems im Wesentlichen parallel zur zweiten Achse des Sensorsystems verlaufen.

19. Verfahren nach einem der Ansprüche 10 bis 18, **dadurch gekennzeichnet, dass** ein optischer und/oder akustischer Alarm abgegeben wird, wenn der berechnete Reifendruck unter eine voreingestellte Grenze fällt.

20. Verfahren nach einem der Ansprüche 10 bis 19, **dadurch gekennzeichnet, dass** während der Fahrt am Vorderrad und am Hinterrad zeitlich verschoben auftretende Schwingungen zur Ermittlung der Geschwindigkeit des Zweirades verwendet werden.

21. Verfahren nach einem der Ansprüche 10 bis 20, **dadurch gekennzeichnet, dass** Zweiradparameter, insbesondere Reifenausgangsdruck, Reifenminimal-druck, Streckeninformationen, zeitlicher Abstand zur letzten Reifendrucküberprüfung und/oder Fahrergewicht, eingegeben werden und dass im Ansprechen auf die eingegebenen Zweiradparameter Pumpintervalle berechnet werden und bei Überschreiten einer vorbestimmten Grenze, insbesondere eines Reifenminimaldrucks oder einer Zeitdauer, ein optisches und/oder akustisches Warnsignal ausgegeben wird.
